(19) Europäisches Patentamt
European Patent Office
Office européen des brevets

(11) EP 2 808 500 A1

(12) **EUROPÄISCHE PATENTANMELDUNG**

(43) Veröffentlichungstag:
**03.12.2014 Patentblatt 2014/49**

(21) Anmeldenummer: **13170064.3**

(22) Anmeldetag: **31.05.2013**

(51) Int Cl.:
***F01K 3/00*** (2006.01) ***F01K 13/00*** (2006.01)
***F02C 1/02*** (2006.01) ***F02C 6/14*** (2006.01)
***F02C 7/36*** (2006.01) ***F25B 1/053*** (2006.01)
***F25B 11/00*** (2006.01) ***F28D 20/00*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
- **Reznik, Daniel**
  **13503 Berlin (DE)**
- **Stiesdal, Henrik**
  **5000 Odense C (DK)**

(54) **Wärmepumpe mit einer in einem Kreislauf geschalteten ersten thermischen Fluidenergie-Maschine und zweiten thermischen Fluidenergie-Maschine**

(57) Die Erfindung betrifft eine Wärmepumpe mit einem Kreislauf (11), in dem ein Kompressor (13) und eine Turbine (17) vorgesehen sind, um das Arbeitsgas abwechselnd zu verdichten und zu entspannen und auf diesem Wege einen Wärmespeicher (16) aufzuladen. Erfindungsgemäß ist vorgesehen, dass für den Kompressor (13) und die Turbinen (17h, 17n) Komponenten aus Gasturbinen verwendet werden. Da die Turbinenstufe (17) der Gasturbine allerdings normalerweise bei anderen Temperaturen betrieben wird, ist es erforderlich, den Massenfluss an Arbeitsgas soweit zu erhöhen, dass die Turbinenstufe in ihrem Arbeitspunkt betrieben werden kann. Zu diesem Zweck wird die Kompressorstufe (13) einer größeren Gasturbine mit der Turbinenstufe (17) einer kleineren Gasturbine kombiniert. Da die Kompressorstufe (13) dann eine geringere Drehzahl zum Betrieb erfordert als die Turbinenstufe (17), ist außerdem ein Getriebe (20) vorgesehen, die den Betrieb der hydrodynamischen Maschinen bei unterschiedlichen Drehzahlen erlaubt.

FIG 1

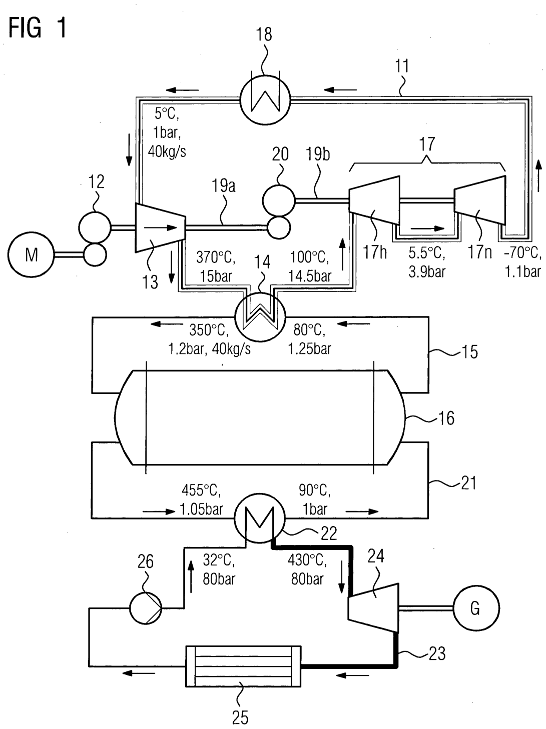


EP 2 808 500 A1

## Beschreibung

Die Erfindung betrifft eine Wärmepumpe mit einem Kreislauf für ein Arbeitsfluid mit einer Antriebsmaschine, einer als Arbeitsmaschine im Kreislauf geschalteten ersten thermischen Fluidenergie-Maschine und einer als Kraftmaschine im Kreislauf geschalteten zweiten Fluidenergie-Maschine. Die Antriebsmaschine, die erste Fluidenergie-Maschine und die zweite Fluidenergie-Maschine sind dabei mechanisch miteinander gekoppelt, beispielsweise mit einem gemeinsamen Antriebsstrang. Eine Wärmepumpe der eingangs angegebenen Art ist beispielsweise aus der WO 2009/044139 A1 bekannt. Diese Wärmepumpe wird verwendet, um die Wärme aus einem Kältespeicher in einen Wärmespeicher zu transportieren. Hierzu werden eine erste thermische Fluidenergie-Maschine und eine zweite thermische Fluidenergie-Maschine in Form von Kolbenmaschinen verwendet. Der Antrieb dieser Maschinen erfolgt durch einen Elektromotor, der immer dann betrieben wird, wenn im elektrischen Netz überschüssige elektrische Energie zur Verfügung steht. Dies ist der Fall bei der regenerativen Stromerzeugung oder, wenn Kraftwerkskapazitäten nicht zeitnah an den aktuellen Stromverbrauch angepasst werden können. Die gespeicherte thermische Energie kann im Bedarfsfall also bei einer Unterversorgung des Netzes mit elektrischem Strom durch Umkehrung des Wärmepumpenzyklus wieder entladen werden, wobei mittels eines Generators elektrischer Strom erzeugt werden kann.

Es besteht nun der Wunsch, in großtechnischem Maßstab als Fluidenergie-Maschinen hydrodynamische Maschinen einzusetzen. Allerdings ist der Aufwand für die Auslegung, Konstruktion und den Bau solcher thermodynamischer Strömungskraftmaschinen (Verdichter und Turbinen) erheblich. Andererseits arbeiten verfügbare Kompressoren und Turbinen in anderen Betriebsbereichen und sind daher nicht mit einem befriedigenden Wirkungsgrad zu betreiben. Dampfturbinen arbeiten bei einer anderen Dichte des Prozessfluids und scheiden schon allein deswegen aus. Gasförmige Prozessfluide werden bei Gasturbinen angewendet, jedoch werden die Gase bei Gasturbinen auf über 1000°C erhitzt und liegen daher in einer geringeren Dichte vor als dies für eine Wärmepumpe bei der thermischen Energiespeicherung im vorliegenden Anwendungsfall erforderlich wäre. Auch hier lässt sich also der Arbeitspunkt nicht durch Verwendung einer marktüblichen Gasturbine einstellen.

Die Aufgabe der Erfindung besteht daher darin, eine Wärmepumpe der eingangs angegebenen Art dahin weiterzubilden, dass verfügbare hydrodynamische Strömungskraftmaschinen kostengünstig eingesetzt werden können.

Diese Aufgabe wird mit der eingangs angegebenen Wärmepumpe erfindungsgemäß dadurch gelöst, dass die zweite thermische Fluidenergie-Maschine den Läufer einer Turbinenstufe einer Gasturbine aufweist und die erste thermische Fluidenergie-Maschine die Kompressorstufe einer Gasturbine aufweist, wobei hierbei erfindungsgemäß Folgendes berücksichtigt wird. Die Kompressorstufe entstammt einer Gasturbine, die eine höhere Ausgangsleistung aufweist als die Gasturbine, der die Turbinenstufe entstammt. Die Kompressorstufe und die Turbinenstufe werden über ein erstes Getriebe mechanisch miteinander gekoppelt, derart, dass sich die Kompressorstufe langsamer dreht als die Turbinenstufe. Mit anderen Worten führt die Getriebeübersetzung zwischen Kompressorstufe und Turbinenstufe dazu, dass die Turbinenstufe und die Kompressorstufe bei unterschiedlichen Drehzahlen betrieben werden können. Dies ist wichtig, da die Kompressorstufe aus einer größeren Gasturbine stammt als die Turbinenstufe, wobei diese aufgrund der genannten Tatsache auch eine geringere Nenndrehzahl beim Betrieb erfordert. Die Einhaltung der Nenndrehzahl bei Turbinenstufe und Kompressorstufe ist jedoch wichtig, damit diese hydrodynamischen Maschinen bei ihrem optimalen Wirkungsgrad arbeiten.

Die technische Maßnahme, die Kompressorstufe einer Gasturbinenserie einer höheren Ausgangsleistung zu entnehmen, als die Turbinenstufe setzt folgende Überlegungen hinsichtlich des Prozessablaufs in der Wärmepumpe voraus.

Um zum Beispiel einen Wärmespeicher mit genügend Wärme zum Betrieb einer Dampfturbine zu versorgen, muss das Arbeitsgas in der Wärmepumpe auf 370 °C erhitzt werden. Hiervon ausgehend gelangt nach einer Modellrechnung das Arbeitsgas mit 1 bar und 5°C zur ersten thermischen Fluidenergie-Maschine. Durch Komprimierung mittels der als Verdichter arbeitenden ersten Fluidenergie-Maschine kommt es zu einer Druckerhöhung auf 15 bar und infolgedessen auch zu einer Temperaturerhöhung auf 370°C. Dieser Berechnung liegt folgende Formel zugrunde

$$T_2=T_1+(T_{2S}-T_1)/\eta_C;\quad T_{2S}=T_1\pi^{(K-1)/K},$$

wobei
$T_2$ die Temperatur am Verdichterausgang,
$T_1$ die Temperatur am Verdichtereingang,
$\eta_c$ der isentropische Wirkungsgrad des Kompressors,
n das Druckverhältnis (hier 15:1) und

K die Kompressibilität ist, die bei Luft 1,4 beträgt.

Der isentropische Wirkungsgrad $\eta_c$ kann bei der Kompressorstufe mit 0,85 vorausgesetzt werden.

Das erhitzte Arbeitsgas durchläuft nun einen Wärmetauscher, wo der Hauptteil der verfügbaren thermischen Energie gespeichert wird. Während der Speicherung kühlt sich das Arbeitsgas auf 100 °C ab, während der Druck (abgesehen von strömungsbedingten Druckverlusten) mit 14,5 bar weitgehend erhalten bleibt. Anschließend wird das Arbeitsgas in der Turbinenstufe entspannt, so dass es auf einem Druckniveau von 1,1 bar anlangt. Dabei kühlt sich das Arbeitsgas auf -70 °C ab. Das Arbeitsgas kann anschließend der Umgebung Wärme entziehen und erwärmt sich dabei wieder auf 5 °C Grundlage für diese Berechnung ist ebenfalls die oben angegebene Formel.

Die Begriffe Kraftmaschine und Arbeitsmaschine werden im Rahmen dieser Anmeldung so verwendet, dass eine Arbeitsmaschine mechanische Arbeit aufnimmt, um ihren Zweck zu erfüllen. Eine thermische Fluidenergie-Maschine, die als Arbeitsmaschine verwendet wird, wird somit als Verdichter oder als Kompressor verwendet. Demgegenüber verrichtet eine Kraftmaschine Arbeit, wobei eine thermische Fluidenergie-Maschine zur Verrichtung der Arbeit die im Arbeitsgas zur Verfügung stehende thermische Energie umwandelt. In diesem Fall wird die thermische Fluidenergie-Maschine also als Motor betrieben.

Der Begriff "thermische Fluidenergie-Maschine" bildet einen Oberbegriff von Maschinen, die einem Arbeitsfluid, im Zusammenhang mit dieser Anmeldung ein Arbeitsgas, thermische Energie entziehen oder diesem thermische Energie zuführen können. Unter thermischer Energie ist sowohl Wärmeenergie als auch Kälteenergie zu verstehen. Thermische Fluidenergie-Maschinen können beispielsweise als Kolbenmaschinen ausgeführt sein. Bevorzugt können auch hydrodynamische thermische Fluidenergie-Maschinen verwendet werden, deren Laufräder einen kontinuierlichen Fluss des Arbeitsgases erlauben. Vorzugsweise kommen axial wirkende Turbinen bzw. Verdichter zum Einsatz.

Unter Berücksichtigung dieser Temperatur müssen für die Turbinenstufe und die Kompressorstufe geeignete Arbeitspunkte gefunden werden, damit diese bei einem optimalen Wirkungsgrad arbeiten. Außerdem ist nur so gewährleistet, dass das oben geforderte Kompressionsverhältnis von 15:1 verwirklicht werden kann. Die Auslegung soll am Beispiel von verfügbaren Kompressorstufen und Turbinenstufen der Firma Siemens erläutert werden.

Die Turbinenstufe wird von der Siemens Gasturbine mit der Typbezeichnung SGT-100 entnommen. Diese hat eine Ausgangsleistung von 4,35 bis 5,4 MW bei 17.384 Umdrehungen/min und einem Verdichtungsverhältnis von 16,6:1. Der Gasdurchsatz liegt bei ca. 21 kg/s. Im Betrieb als Gasturbine werden Verbrennungsgase bei ungefähr 1100°C entspannt. Hieraus ergibt sich ein korrigierter Massenfluss für den Betrieb als Turbinenstufe der Gasturbine zu

$$\dot{m} \cdot \frac{\sqrt{T}}{p} = 21\ \mathrm{kg/s} . \frac{\sqrt{1373K}}{15{,}6\ bar} = 52\ \mathrm{kg} \cdot \frac{\sqrt{K}}{s.bar}$$

Der Niederdruckteil der Turbinenstufe lässt sich gleichermaßen berechnen zu

$$21\ \mathrm{kg/s} . \frac{\sqrt{1053K}}{3{,}9\ bar} = 174\ \mathrm{kg} \cdot \frac{\sqrt{K}}{s.bar}$$

Wird diese SGT-100 Turbine nun in der erfindungsgemäßen Anwendung als Wärmepumpe verwendet, herrschen im Wesentlichen bis auf die Temperatur dieselben Parameter. Die Temperatur ist allerdings wesentlich niedriger, und zwar 373 K vor dem Hochdruckteil der Turbinenstufe und 279 K vor dem Niederdruckteil der Turbinenstufe. Setzt man diese Daten in die oben genannte Formel für den korrigierten Massenfluss ein, so erhält man für den Hochdruckteil der Turbinenstufe

$$21\ \mathrm{kg/s} \cdot \frac{373\ K}{15{,}6\ bar} = 26\ \mathrm{kg} \cdot \frac{\sqrt{K}}{s.bar}$$

und für den Niederdruckteil der Turbinenstufe

$$21\ kg/s \cdot \frac{\sqrt{279K}}{3{,}9\ bar} = 90\ kg \cdot \frac{\sqrt{K}}{s\ bar} \quad .$$

Vergleicht man diese Ergebnisse mit den berechneten korrigierten Massenflüssen im Gasturbinenbetrieb, so erkennt man, dass der korrigierte Massenfluss im Betrieb als Wärmepumpe um ungefähr 50 % reduziert ist. Bei diesem Massenfluss kann das Verdichtungsverhältnis nicht mehr eingehalten werden, weswegen die Turbine nicht als Kraftmaschine arbeiten würde.

Hier setzt die Erfindung an, indem die Kompressorstufe der Siemens Turbine mit der Bezeichnung SGT-400 verwendet wird. Diese hat eine Ausgangsleistung von 12,9 bis 14,4 MW, eine Drehzahl von 9500 Umdrehungen/min und ein Verdichtungsverhältnis von 16,8:1 bis 18,9:1. Der realisierte Massenfluss liegt zwischen 39,4 kg/s und 44,3 kg/s. Damit liegt der durch diese Kompressorstufe realisierte Massenfluss ungefähr beim doppelten desjenigen der STG-100. Die Folge davon ist, dass durch Steigerung des Massenflusses auf das Doppelte der korrigierte Massenfluss auch auf das Doppelte ansteigt. Auf diese Weise können die Auswirkungen aufgrund der geringeren Temperatur des Arbeitsgases ausgeglichen werden, so dass die Turbinenstufe wieder bei ihrem Arbeitspunkt arbeitet.

Gemäß einer Ausgestaltung der Erfindung ist vorgesehen, dass die Arbeitsmaschine ein Elektromotor ist und die mechanische Kopplung zu der Turbinenstufe sowie der Kompressorstufe über ein zweites Getriebe ausgeführt ist, wobei das Übersetzungsverhältnis derart bestimmt ist, dass der Elektromotor bei seiner Nenndrehzahl betrieben wird. Insbesondere können vorteilhaft Synchronmaschinen mit Drehzahlen von 3000 Umdrehungen/min verwendet werden. Das Übersetzungsverhältnis zu der Kompressorstufe kann so gewählt werden, dass diese ebenfalls bei ihrer Nenndrehzahl angetrieben wird. Über die schon genannte Getriebestufe ist die Anpassung der geforderten Drehzahl für die Turbinenstufe möglich. Der Betrieb des Elektromotors bei seinem Arbeitspunkt hat vorteilhaft einen weiteren Wirkungsgradgewinn der Anlage zur Folge.

Eine weitere Ausführung der Erfindung sieht vor, dass zwischen der Kompressorstufe und der Turbinenstufe ein erster Wärmetauscher angeordnet ist, der die Wärme an einen Sekundärkreislauf abgibt, in dem ein Wärmespeicher vorgesehen ist. Dies hat den Vorteil, dass der Sekundärkreislauf nicht unter den im Kreislauf der Wärmepumpe (Primärkreislauf) herrschenden Druckbedingungen betrieben werden muss. Damit kann auch der Wärmespeicher und das in diesem realisierte Kanalsystem zum Austausch der Wärme unter einem geringeren Druck stehen, was die Auslegung des Wärmespeichers bedeutend vereinfacht. Eine wieder andere Ausgestaltung der Erfindung sieht vor, dass die Turbinenstufe einen Hochdruckteil und einen Niederdruckteil aufweist. Diese Bauform ist bei Gasturbinen üblich, wobei der Hochdruckteil als Kompressorturbine bezeichnet wird und leistungsmäßig zum Antrieb des Kompressors ausgelegt ist. Der Niederdruckteil der Turbine wird Leistungsturbine bezeichnet, die die Nutzleistung der Gasturbine zur Verfügung stellt, welche beispielsweise zur Stromerzeugung genutzt werden kann. Bei der Anwendung gemäß der Erfindung ist sowohl der Hochdruckteil als auch der Niederdruckteil auf einer Welle angeordnet und die Gesamtleistung der Turbinenstufe unterstützt die Antriebsmaschine beim Betrieb der Kompressorstufe.

Gemäß einer besonders vorteilhaften Ausgestaltung der Erfindung ist vorgesehen, dass zwischen dem ersten Wärmetauscher und dem Hochdruckteil ein dritter Wärmetauscher mit seinen Primäranschlüssen geschaltet ist. Weiterhin ist zwischen dem Hochdruckteil und dem Niederdruckteil ein vierter Wärmetaucher geschaltet ist, der Wärme mit der Umgebung austauscht. Hinter dem vierten Wärmetauscher und vor dem Niederdruckteil ist der dritte Wärmetauscher mit seinen Sekundäranschlüssen geschaltet. Diese Anordnung hat den Vorteil, dass das Arbeitsgas, nachdem es aus dem Hochdruckteil der Turbinenstufe ausströmt, über den vierten Wärmetauscher Wärme aus der Umgebung aufnehmen kann, die dem Wärmepumpenprozess zur Verfügung gestellt werden kann. Damit die Temperatur hinter dem Hochdruckteil möglichst gering ist, wird dem Arbeitsgas vor dem Eintritt in den Hochdruckteil über den dritten Wärmetauscher weitere Wärme entzogen und dem Arbeitsgas hinter dem Hochdruckteil wieder zugeführt. Diese Wärme wird im Niederdruckteil der Turbinenstufe umgesetzt.

Außerdem ist es vorteilhaft, wenn zwischen der Turbinenstufe und der Kompressorstufe ein zweiter Wärmetauscher in dem Kreislauf vorgesehen ist. Dieser Wärmetauscher vergrößert die Wärmemenge, die dem Arbeitsgas auf dem Weg von der Turbinenstufe zur Kompressorstufe aus der Umwelt zugeführt werden kann. Diese Wärme steht der Wärmepumpe zusätzlich zur Verfügung und vergrößert damit vorteilhaft die im Wärmespeicher gespeicherte Wärmemenge.

Eine besonders kostengünstige Lösung wird vorteilhaft erhalten, wenn die Turbinenstufe mit Turbinenschaufeln ausgestattet ist, bei denen auf eine Korrosionsschutzbeschichtung und auf eine thermische Schutzbeschichtung verzichtet wurde. Die genannten Beschichtungen werden bei Gasturbinen aufgetragen, da diese unter extremen Bedingungen (korrosive Verbrennungsgase über 1000°C Wärme der Prozessgase) betrieben werden. Im Wärmepumpenkreislauf erfolgt der Betrieb bei wesentlich geringeren Temperaturen von unter 100° und mit dem Arbeitsmedium Luft, weswegen derartige Maßnahmen für den Korrosionsschutz nicht erforderlich sind. Die Turbinenstufe kann in der erfindungsgemäßen Wärmepumpe daher als unter Gesichtspunkten der Anwendung in Gasturbinen halbfertiges Bauteil verwendet werden.

Eine andere Möglichkeit besteht darin, dass die Turbinenstufe mit den genannten Schutzschichten versehen wird, wie sie auch bei Gasturbinen vorgesehen werden. Außerdem wird in diesem Fall zwischen der Kompressorstufe und der Turbinenstufe gemäß einer vorteilhaften Ausbildung der Erfindung eine Verbrennungskammer mit einer Zuleitung für einen Brennstoff im Kreislauf vorgesehen. Zwischen der Kompressorstufe und der Verbrennungskammer wird ein 3-Wege-Ventil vorgesehen, mit dem der Massenfluss des Prozessgases aufgeteilt werden kann, und zwar mit einem Teil in den Wärmepumpenkreislauf, der auch die Verbrennungskammer enthält, und mit einem weiteren Teil in eine Zusatzleitung, die zu einer Zusatzturbine führt, welche fluidisch unabhängig von der Turbinenstufe betrieben wird. Der Anteil des Massenflusses, der im Wärmpumpenkreislauf verbleibt, wird betragsmäßig so bestimmt, dass nach Erhitzung des Arbeitsgases in der Verbrennungskammer der unter den thermischen Bedingungen erforderliche korrigierte Massenfluss vorliegt, damit die Turbinenstufe in ihrem Arbeitspunkt betrieben werden kann. Dies ist oben bereits ausführlich erläutert worden. Der restliche Massenfluss wird abgezweigt und über einen fünften Wärmetauscher, der mit seinen Primäranschlüssen in der Zusatzleistung vorgesehen ist, erwärmt. Anschließend wird dieser abgeteilte Massenfluss über die Zusatzturbine entspannt. Der fünfte Wärmetauscher wird von der Abwärme der Turbinenstufe gespeist.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:

Figur 1 bis 3 verschiedene Ausführungsbeispiele der erfindungsgemäßen Wärmepumpe als schematische Blockschaltbilder und

Figur 4 und 5 das Druckverhältnis PR welches durch die den Hochdruckteil (Figur 4) und den Niederdruckteil (Figur 5) einer Turbinenstufe in Abhängigkeit vom korrigierten Massenfluss $m_{cor}$ erreichbar ist.

In der Figur 1 ist eine Wärmepumpe dargestellt, die einen Kreislauf 11 für ein Arbeitsgas aufweist. Dieser kann beispielsweise mit Umgebungsluft betrieben werden, wobei der Kreislauf 11 geschlossen ist. Über einen Antriebsmotor M und ein erstes Getriebe 12 wird eine Kompressorstufe 13 angetrieben. Das Arbeitsgas, welches mit 5 °C bei 1 bar Druck in den Kompressor eingeleitet wird, verlässt diesen mit einer Temperatur von 370 °C und einem Druck von 15 bar. Über einen ersten Wärmetauscher 14 wird die Temperatur des Arbeitsgases an einen Sekundärkreislauf 15 abgegeben, in dem ein Wärmespeicher 16 geschaltet ist.

Im Wärmespeicher 16 ist ein nicht näher dargestelltes Kanalsystem ausgebildet, welches ebenfalls als Wärmetauscher zwischen dem Fluid im Sekundärkreislauf und dem Speichermaterial des Wärmespeichers fungiert. Das Arbeitsfluid im Sekundärkreislauf wird durch den Wärmetauscher auf 350°C erwärmt und durch den Wärmespeicher wieder auf 80°C abgekühlt. Der Druck des Fluids kann im Wesentlichen gleichbleibend bei 1,2 bis 1,25 bar liegen.

Das Arbeitsfluid im Kreislauf 11 (Primärkreislauf) wird durch den Wärmetauscher 14 auf 100° abgekühlt und in einem Hochdruckteil 17h der Turbinenstufe 17 eingespeist. Dort wird es auf einen Druck von 3,9 bar entspannt und verlässt den Hochdruckteil 17h mit 5,5 °C. In diesem Zustand wird das Arbeitsgas anschließend in den Niederdruckteil 17n der Turbinenstufe 17 eingespeist und verlässt diese mit einer Temperatur von -70 °C und von einem Druck von 1,1 bar. Das Arbeitsgas wird anschließend einem zweiten Wärmetauscher 18 zugeführt, indem es Wärme aus der Umgebung aufnimmt. Der zweite Wärmetauscher 18 kann beispielsweise mit Flusswasser gespeist werden. Das Arbeitsgas verlässt den zweiten Wärmetauscher 18 mit einer Temperatur von 5 °C.

Die Kompressorstufe 13 entstammt der Siemens Gasturbine SGT-400. Die Turbinenstufe 17 entstammt der Siemens Gasturbine SGT-100. Die Kompressorstufe erzeugt einen Massenfluss des Arbeitsgases von 40 kg/s. Dieser ist geeignet, um auch die Turbinenstufe unter den gegebenen thermodynamischen Voraussetzungen zumindest nahe ihres Arbeitspunktes zu betreiben. Da die Kompressorstufe 13 eine geringere Nenndrehzahl aufweist als die Turbinenstufe 17 ist zwischen Antriebswellen 19a, 19b für die Kompressorstufe und die Turbinenstufe ein zweites Getriebe 20 vorgesehen.

Mit dem elektrischen Antriebsmotor M kann die Wärmepumpe zum Aufladen des Wärmespeichers 16 genutzt werden, wenn im elektrischen Netz Überkapazitäten zur Verfügung stehen. In Zeiten eines Bedarfs an elektrischer Energie kann der Wärmespeicher 16 über einen Entladekreislauf 21 und einen sechsten Wärmetauscher 22 entladen werden. In dem Wärmetauscher wird das Arbeitsfluid (Flüssigkeit oder Gas) von 455 °C auf 90 °C abgekühlt, wobei die Wärme in einem Dampfkreislauf 23 eingespeist wird. Hier wird Wasserdampf bei einem Druck von 80 bar und einer Temperatur von 430 °C erzeugt und über eine Dampfturbine 24 entspannt, anschließend über einen Kühler 25 verflüssigt und über eine Speisepumpe 26 dem sechsten Wärmetauscher 22 wieder zugeführt, und zwar mit einer Temperatur von 32 °C. Die Dampfturbine erzeugt über einen Generator G den gerade benötigten elektrischen Strom.

In Figur 2 ist im Wesentlichen derselbe Wärmepumpenkreislauf dargestellt. Allerdings weist dieser zusätzlich noch eine zweite Möglichkeit auf, Wärme der Umgebung zu entziehen. Zu diesem Zweck ist im Kreislauf 11 ein dritter Wärmetauscher 27 vorgesehen, der dem Arbeitsfluid vor dem Passieren des Hochdruckteils 17h der Turbinenstufe 17 Wärme entzieht. Das Arbeitsgas wird hierbei von 100 °C auf 50 °C abgekühlt. Nach der Entspannung über den Hochdruckteil 17h weist das Arbeitsfluid dann eine Temperatur von -40 °C und einen Druck von 4 bar auf. Aufgrund dieser geringen Temperatur kann dem Arbeitsgas über einen vierten Wärmetauscher 28 Wärme aus der Umgebung (beispielsweise aus Flusswasser) zugeführt werden. Damit erreicht das Arbeitsgas wieder eine Temperatur von 5 °C. Eine weitere Erwärmung des Arbeitsgases wird dadurch erreicht, dass dieses in den dritten Wärmetauscher eingeleitet wird, wo es dem auf dem Weg zum Hochdruckteil befindlichen Arbeitsgas weitere Wärme entzieht und auf 55 °C aufgewärmt wird. In diesem Zustand wird das Arbeitsgas dem Niederdruckteil 17n der Turbinenstufe 17 zugeführt und auf 1,1 bar entspannt. Am Ausgang des Niederdruckteils 17n herrscht eine Temperatur von -40 °C im Arbeitsgas.

Der Figur 3 kann eine fluidische Schaltung entnommen werden, mit der in dem erfindungsgemäßen Wärmepumpenkreislauf eine Art Notlauf realisiert werden kann, falls ein Bedarf an elektrischem Strom über einen längeren Zeitraum gegeben ist und der Wärmespeicher 16 gemäß Figur 1 erschöpft ist. In diesem Fall wird der erste Wärmetauscher 14 (siehe Figur 1) über eine nicht näher dargestellte Bypassleitung umgangen und der Wärmetauscher 18 (siehe Figur 1) wird dadurch deaktiviert, dass der geschlossene Kreislauf 11 vor der Kompressorstufe und hinter dem Niederdruckteil 17n geöffnet wird. Hinter der Kompressorstufe 13 wird ein Dreiwegeventil 29 so eingestellt, dass sich der Massenfluss des Arbeitsgases zu 20 kg/s auf die Turbinenstufe 17 und zu 20 kg/s (also der Hälfte) auf eine Zusatzturbine 30 verteilt. Hierzu wird der für die Zusatzturbine 30 gedachte Anteil des Massenflusses in eine Zusatzleitung 31 abgezweigt. Diese passiert einen Wärmetauscher, um das Arbeitsgas von 380 °C auf 450 °C zu erhitzen und wird über die Zusatzturbine 30, die auf diesem Betriebszustand optimiert ist, auf 1 bar entspannt, wobei eine Abkühlung des Arbeitsgases auf 100 °C erfolgt.

In den Teil des Wärmepumpenkreislaufs hinter dem Dreiwegeventil 29, der zu der Turbinenstufe 17 führt, wird fluidisch ein Brenner 32 geschaltet, der über eine Zuleitung 33 mit einem Brennstoff versorgt wird. In diesem Brenner wird der Volumenstrom des Arbeitsgases auf 1100 °C erhitzt, womit die Bedingungen vorliegen, die die SGT-100 Turbinenstufe 17 bei dem Betrieb als Gasturbine erfährt. Daher ist auch eine Halbierung des Volumenflusses auf 20 kg/s erforderlich, da es sich bei diesem Volumenstrom um den konstruktiv vorgesehenen Volumenstrom beim Betrieb der SGT-100 Turbinenstufe als Gasturbine handelt. Damit können die in der Wärmepumpe zur Verfügung stehenden hydrodynamischen Maschinen nach dem Prinzip der Gasturbine genutzt werden, um auf diesem Wege über einen Generator G elektrischen Strom zu erzeugen. Die Überkapazität der Kompressorstufe 13 wird über die Zusatzturbine 30 abgebaut. Die Abwärme aus der Gasturbine kann über eine Ableitung 34 in einen fünften Wärmetauscher 35 eingeleitet werden, der das Arbeitsgas in der Zusatzleitung 31 vor dem Passieren der Zusatzturbine 30 erwärmt.

Der Figur 4 lässt sich entnehmen, wie bei dem Hochdruckteil 17h der Turbinenstufe 17 in Abhängigkeit des korrigierten Massenflusses $m_{cor}$ sich das Druckverhältnis PR verändert. Es wird deutlich, dass bei einem Absinken des korrigierten Massenflusses unterhalb des Nennwertes das erreichbare Druckverhältnis schnell auf 1:1 absinkt. Dies zeigt, dass die Korrektur über einen größer dimensionierten Kompressor unbedingt erforderlich ist. Wie Figur 5 zeigt, gilt dies in gleicher Weise auch für den korrigieren Massenfluss des Niederdruckteils 17n der Turbinenstufe 17.

## Patentansprüche

1. Wärmepumpe mit einem Kreislauf (11) für ein Arbeitsfluid mit einer Antriebsmaschine (11), einer als Arbeitsmaschine im Kreislauf (11) geschalteten ersten thermischen Fluidenergie-Maschine und einer als Kraftmaschine im Kreislauf (11) geschalteten zweiten Fluidenergie-Maschine, wobei die Antriebsmaschine (11), die erste Fluidenergie-Maschine und die zweite Fluidenergie-Maschine mechanisch miteinander gekoppelt sind,
**dadurch gekennzeichnet,**
**dass** die zweite thermische Fluidenergie-Maschine die Turbinenstufe (17) einer Gasturbine aufweist und die erste thermische Fluidenergie-Maschine die Kompressorstufe (13) einer Gasturbine aufweist, wobei

    - die Kompresserstufe (13) einer Gasturbine entstammt, die eine höhere Ausgangsleistung aufweist als die Gasturbine, der die Turbinenstufe (17) entstammt und
    - die Kompressorstufe (13) und die Turbinenstufe (17) über ein erstes Getriebe (20) mechanisch miteinander gekoppelt sind, derart, dass sich die Kompressorstufe (13) langsamer dreht, als die Turbinenstufe (17).

2. Wärmepumpe nach Anspruch 1,
**dadurch gekennzeichnet,**
**dass** die Antriebsmaschine (11) ein Elektromotor ist und die mechanische Kopplung zu der Turbinenstufe (17) sowie der Kompressorstufe (13) über ein zweites Getriebe (12) ausgeführt ist, wobei das Übersetzungsverhältnis derart bestimmt ist, dass der Elektromotor bei seiner Nenndrehzahl betrieben wird.

3. Wärmepumpe nach einem der voranstehenden Ansprüche, **dadurch gekennzeichnet**, **dass** zwischen der Kompressorstufe (13) und der Turbinenstufe (17) ein erster Wärmetauscher (14) angeordnet ist, der die Wärme an einen Sekundärkreislauf (15) abgibt, in dem ein Wärmespeicher (16) vorgesehen ist.

4. Wärmepumpe nach einem der voranstehenden Ansprüche, **dadurch gekennzeichnet**, **dass** die Turbinenstufe (17) einen Hochdruckteil (17h) und einen Niederdruckteil (17n) aufweist.

5. Wärmepumpe nach Anspruch 4, **dadurch gekennzeichnet**, **dass**

   - zwischen dem ersten Wärmetauscher (14) und dem Hochdruckteil (17h) ein dritter Wärmetauscher (27) mit seinen Primäranschlüssen geschaltet ist,
   - zwischen dem Hochdruckteil (17h) und dem Niederdruckteil (11) ein vierter Wärmetaucher (28) geschaltet ist, der Wärme mit der Umgebung austauscht und
   - hinter dem vierten Wärmetauscher (28) und vor dem Niederdruckteil (17n) der dritte Wärmetauscher (27) mit seinen Sekundäranschlüssen geschaltet ist.

6. Wärmepumpe nach einem der voranstehenden Ansprüche, **dadurch gekennzeichnet**, **dass** zwischen der Turbinenstufe (17) und der Kompressorstufe (13) ein zweiter Wärmetauscher (18) in dem Kreislauf (11) vorgesehen ist.

7. Wärmepumpe nach einem der voranstehenden Ansprüche, **dadurch gekennzeichnet**, **dass** die Turbinenstufe (17) mit Turbinenschaufeln ausgestattet ist, bei denen auf eine Korrosionsschutzbeschichtung und auf eine thermische Schutzbeschichtung verzichtet wurde.

8. Wärmepumpe nach einem der Ansprüche 1 bis 6, **dadurch gekennzeichnet**, **dass**

   - zwischen der Kompressorstufe (13) und der Turbinenstufe (17) eine Verbrennungskammer (32) mit einer Zuleitung (33) für einen Brennstoff im Kreislauf (11) vorgesehen ist,
   - zwischen der Kompressorstufe (13) und der Verbrennungskammer (32) ein Dreiwegeventil (29) vorgesehen ist, von der eine Zusatzleitung (31) zu einer Zusatzturbine (30) führt und
   - zwischen dem Dreiwegeventil (29) und der Zusatzturbine (30) ein fünfter Wärmetauscher (35) mit seinen Primäranschlüssen in der Zusatzleitung (30) vorgesehen ist, wobei der fünfte Wärmetauscher (35) mit seinen Sekundäranschlüssen in eine Ableitung (34) geschaltet ist, die von der Turbinenstufe (17) kommt.

FIG 1

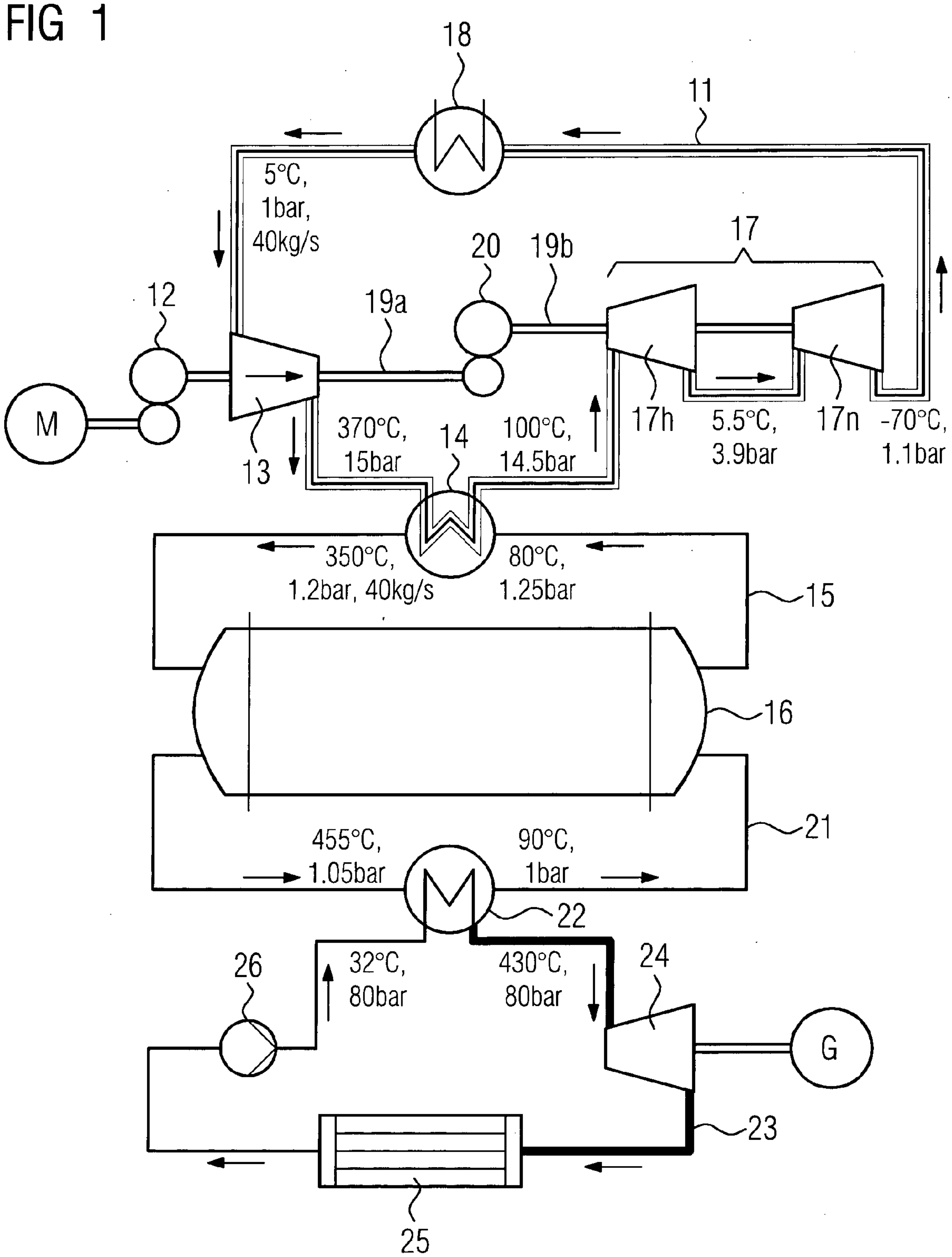
18
11
5°C,
1bar,
40kg/s
17
20
19b
12
19a
M
13
370°C,
15bar
14
100°C,
14.5bar
17h
5.5°C,
3.9bar
17n
-70°C,
1.1bar
350°C,
1.2bar, 40kg/s
80°C,
1.25bar
15
16
21
455°C,
1.05bar
90°C,
1bar
22
26
32°C,
80bar
430°C,
80bar
24
G
23
25

FIG 2

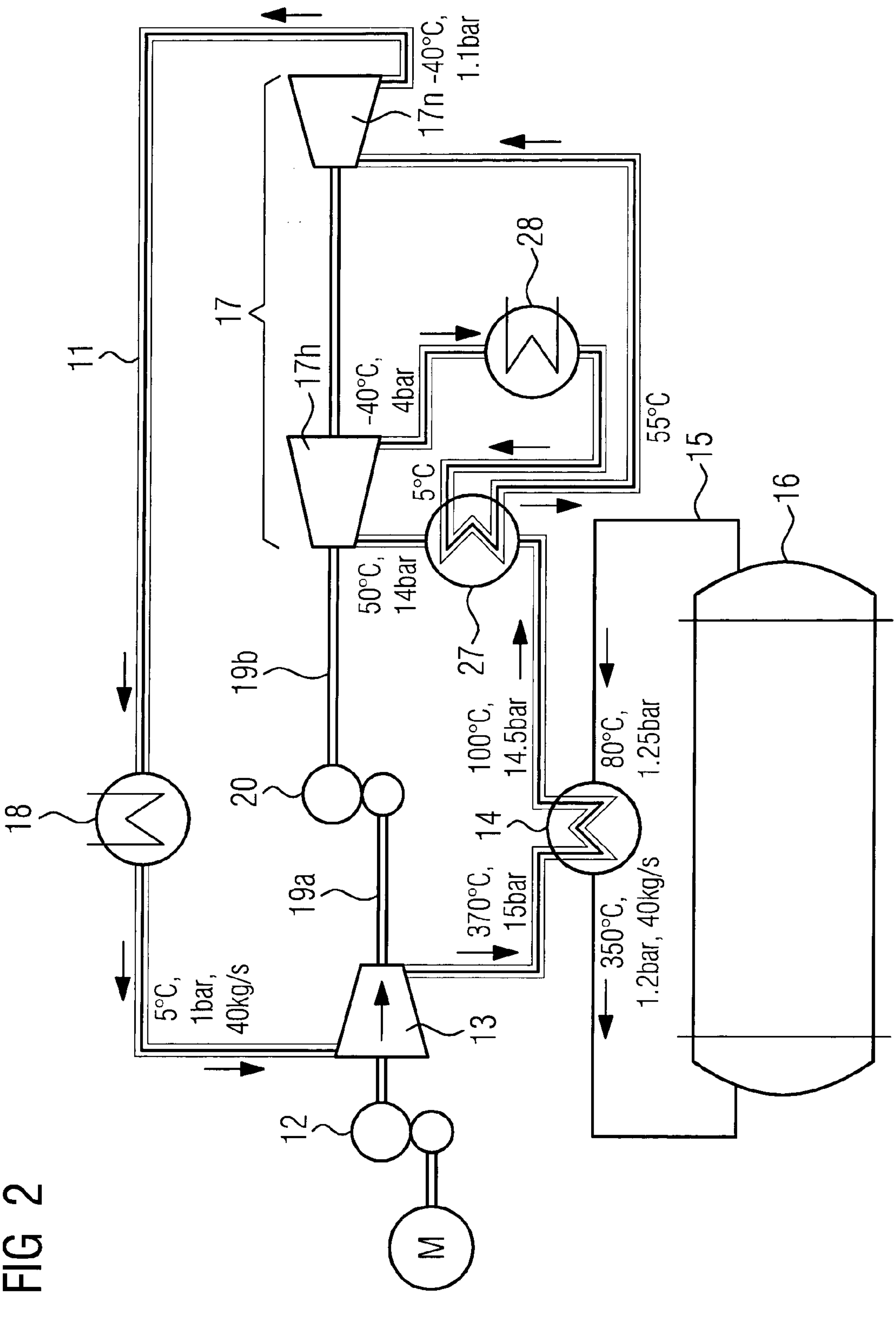
11
17
17h
17n -40°C, 1.1bar
-40°C, 4bar
28
55°C
5°C
15
16
50°C, 14bar
27
19b
20
100°C, 14.5bar
80°C, 1.25bar
18
14
19a
370°C, 15bar
350°C, 1.2bar, 40kg/s
5°C, 1bar, 40kg/s
13
12
M

FIG 3

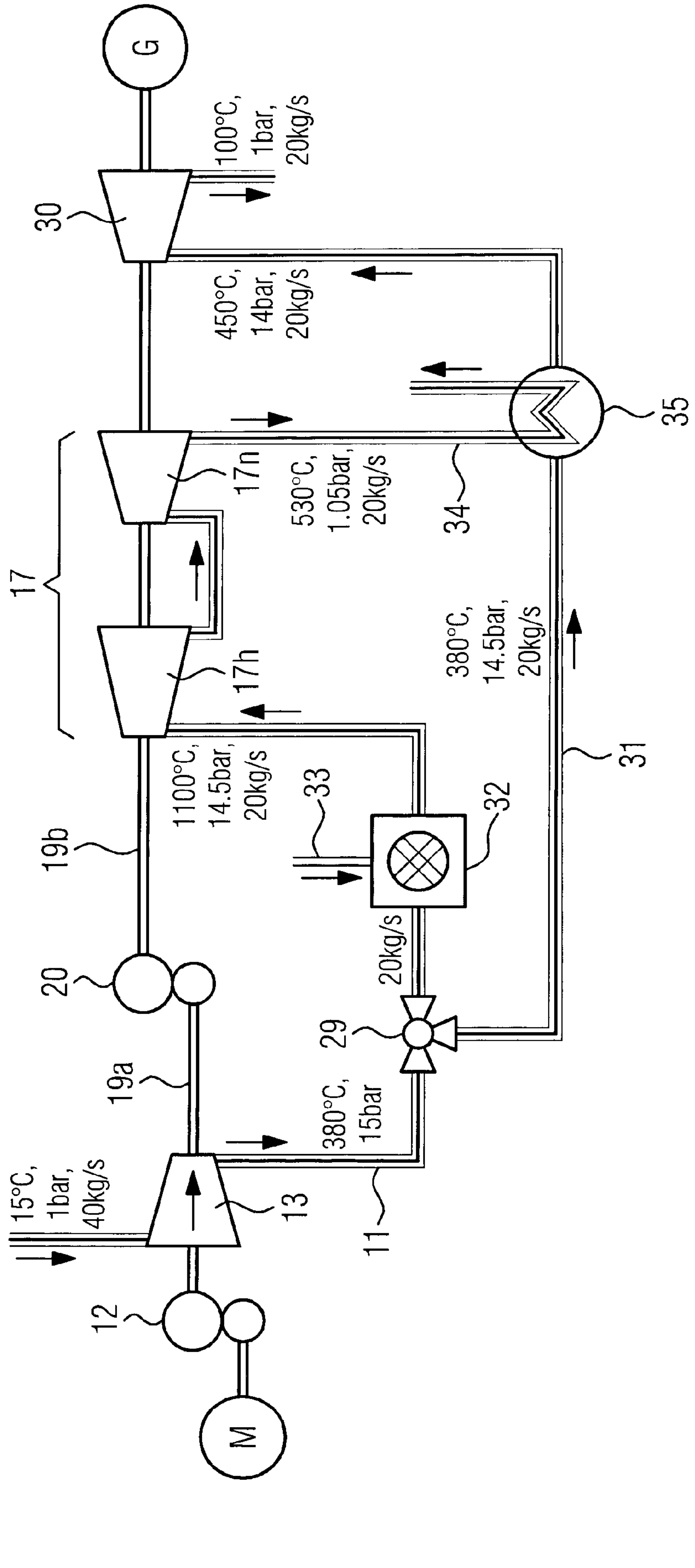
G
M
100°C, 1bar, 20kg/s
30
450°C, 14bar, 20kg/s
35
17
17n
530°C, 1.05bar, 20kg/s
34
17h
380°C, 14.5bar, 20kg/s
1100°C, 14.5bar, 20kg/s
33
32
31
19b
20
20kg/s
29
19a
380°C, 15bar
15°C, 1bar, 40kg/s
13
11
12

FIG 4

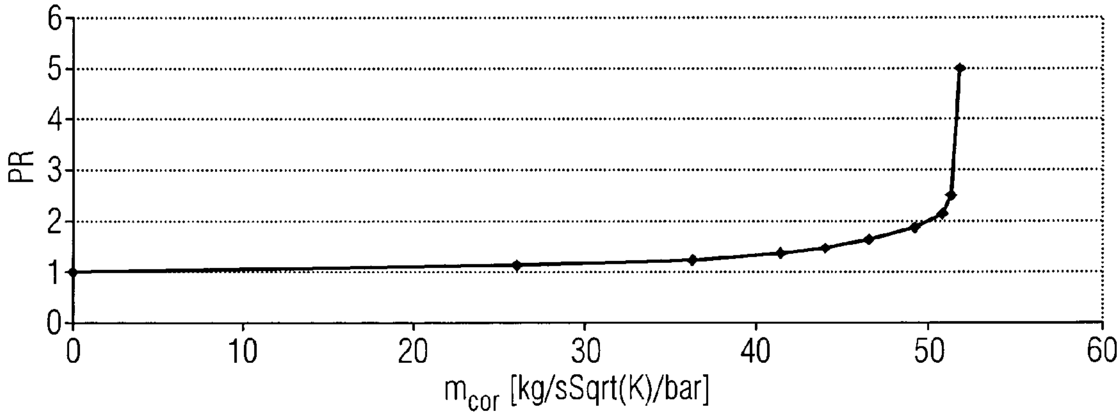
6
5
4
3
2
1
0
PR
0
10
20
30
40
50
60
$m_{cor}$ [kg/sSqrt(K)/bar]

FIG 5

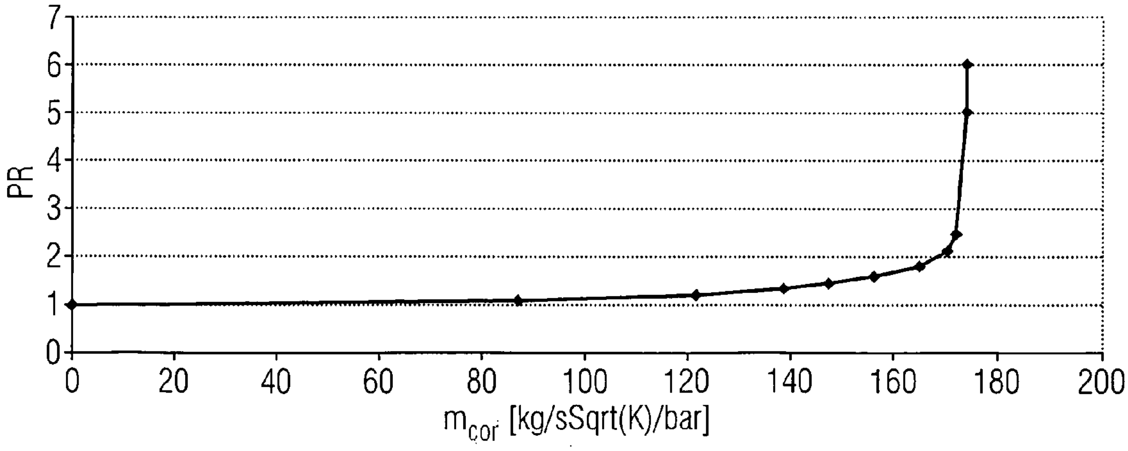
7
6
5
4
3
2
1
0
PR
0
20
40
60
80
100
120
140
160
180
200
$m_{cor}$ [kg/sSqrt(K)/bar]

Europäisches Patentamt
European Patent Office
Office européen des brevets

# EUROPÄISCHER RECHERCHENBERICHT

Nummer der Anmeldung
EP 13 17 0064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y<br>A | US 2010/251712 A1 (NAKHAMKIN MICHAEL [US]) 7. Oktober 2010 (2010-10-07)<br>* Absätze [0005] - [0027]; Abbildungen 1,2 * | 1-4,6,7<br>5,8 | INV.<br>F01K3/00<br>F01K13/00<br>F02C1/02<br>F02C6/14<br>F02C7/36<br>F25B1/053<br>F25B11/00<br>F28D20/00 |
| Y | US 4 275 310 A (SUMMERS WILLIAM A ET AL) 23. Juni 1981 (1981-06-23)<br>* Abbildungen 1,2 * | 1-4,6,7 | |
| Y | EP 2 447 501 A2 (NUOVO PIGNONE SPA [IT]) 2. Mai 2012 (2012-05-02)<br>* Abbildung 2 * | 1-4,6,7 | |
| A | EP 2 574 865 A1 (SIEMENS AG [DE]) 3. April 2013 (2013-04-03)<br>* Abbildung 2 * | 1 | |
| | | | RECHERCHIERTE SACHGEBIETE (IPC) |
| | | | F01K<br>F02C<br>F25B<br>F28D |

Der vorliegende Recherchenbericht wurde für alle Patentansprüche erstellt

1

| Recherchenort | Abschlußdatum der Recherche | Prüfer |
|---|---|---|
| München | 28. November 2013 | Lepers, Joachim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 13 17 0064

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2013

| Im Recherchenbericht angeführtes Patentdokument | Datum der Veröffentlichung | Mitglied(er) der Patentfamilie | Datum der Veröffentlichung |
|---|---|---|---|
| US 2010251712 A1 | 07-10-2010 | CA 2802848 A1 | 22-12-2011 |
| | | EP 2582924 A2 | 24-04-2013 |
| | | US 2010251712 A1 | 07-10-2010 |
| | | US 2013232974 A1 | 12-09-2013 |
| | | WO 2011159586 A2 | 22-12-2011 |
| US 4275310 A | 23-06-1981 | CA 1151434 A1 | 09-08-1983 |
| | | EP 0046803 A1 | 10-03-1982 |
| | | US 4275310 A | 23-06-1981 |
| | | WO 8102443 A1 | 03-09-1981 |
| EP 2447501 A2 | 02-05-2012 | CN 102536352 A | 04-07-2012 |
| | | EP 2447501 A2 | 02-05-2012 |
| | | JP 2012097737 A | 24-05-2012 |
| | | RU 2011143463 A | 10-05-2013 |
| | | US 2012102937 A1 | 03-05-2012 |
| EP 2574865 A1 | 03-04-2013 | EP 2574865 A1 | 03-04-2013 |
| | | WO 2013045243 A1 | 04-04-2013 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009044139 A1